# FASCICULE DE BREVET EUROPEEN

(11) **EP 0 616 139 B1**
(45) Date de publication et mention de la délivrance du brevet: **18.09.1996**
(21) Numéro de dépôt: 94400527.1
(22) Date de dépôt: 10.03.1994
(51) Int. Cl.: F16B 21/04

(54) **Dispositif de fixation d'un boîtier cylindrique sur une plaque de support**
Vorrichtung zur Befestigung eines zylindrischen Gehäuses auf einer Tragplatte
Device for fixing a cylindrical housing on a support plate

(30) Priorité: 17.03.1993 FR 9303331
(43) Date de publication de la demande: 21.09.1994
(73) Titulaire: AUTOMOBILES PEUGEOT, 75116 Paris (FR); AUTOMOBILES CITROEN, 92200 Neuilly sur Seine (FR)
(72) Inventeur: de Vandiere, Aymar, F-92200 Neuilly sur Seine (FR)
(74) Mandataire: Robert, Jean-François

(56) Documents cités:
- EP-A- 0 172 006
- DE-A- 2 728 133
- FR-A- 2 549 532
- FR-A- 2 596 116

## Description

Il est connu de fixer un boîtier cylindrique sur une plaque de support ou paroi en le munissant d'une collerette portant un ou plusieurs trous aptes à recevoir des éléments de fixation se vissant dans la plaque de support. Mais le vissage et le taraudage dans les tôles de faible épaisseur sont délicats à réaliser et fragiles. D'autre part il est nécessaire de maintenir le boîtier pendant le vissage; ce maintien complique l'opération de vissage et la rend coûteuse. Il est extrêmement difficile d'assurer la fixation à l'aide d'un robot.

La présente invention a pour objet un dispositif de fixation du type baïonnette d'un boîtier cylindrique sur une plaque de support qui peut au contraire être réalisée par un robot.

Le dispositif objet de l'invention est du type défini dans le préambule de la revendication 1. Le document FR-A-2549532 décrit un dispositif de ce type.

Le document EP-A-0172006 décrit un système de fixation d'un cylindre dans une ouverture d'une paroi au moyen d'ergots portés par le cylindre et s'encastrant dans des évidements ménagés dans cette ouverture.

Selon la principale caractéristique du dispositif objet de l'invention, les moyens d'indexage et de verrouillage angulaire sont constitués par un ergot axial pouvant traverser une première encoche de la paroi lors de la mise en place du boîtier et s'engager dans une seconde encoche de la paroi lorsque le boîtier est en position de verrouillage.

Chacun des ergots périphériques peut être prolongé par un talon, la forme et les dimensions des découpes de la paroi correspondant à celles des ergots avec leurs talons en surépaisseur. Cette disposition assure l'indexage aussi bien pour la mise en place que pour le verrouillage.

Les moyens de rattrapage de jeu peuvent être constitués par une bague en élastomère disposée entre la paroi et une collerette extérieure du boîtier. Ils peuvent également être constitués par une fourchette dont les branches élastiques ont une forme ondulée et peuvent prendre appui à la fois sur la paroi et sur une collerette extérieure du boîtier.

On décrit ci-après, à titre d'exemple non limitatif, un mode de réalisation du dispositif de fixation selon l'invention, avec référence au dessin annexé dans lequel :
La Figure 1 est une vue en perspective montrant le boîtier, la paroi et une bague élastique de rattrapage de jeu, ces éléments étant séparés les uns des autres.
La Figure 2 est une vue en coupe par un plan passant par l'axe du boîtier. La Figure 3 est une vue en perspective d'une fourchette de rattrapage de jeu.
La Figure 4 est une vue en coupe par un plan passant par l'axe du boîtier, dans le cas de l'utilisation de la fourchette.

Au dessin, on voit un boîtier cylindrique 1 dont une extrémité doit être fixée dans une ouverture 2 d'une paroi mince 3.

Ladite extrémité du boîtier comporte deux ergots périphériques plans diamétralement opposés 4 et 4a faisant saillie par rapport à la paroi latérale extérieure du boîtier. Chacun de ces ergots est prolongé par un talon 5 ou 5a formant butée et s'étendant parallèlement à l'axe du boîtier vers la seconde extrémité du boîtier.

Les ergots 4 et 4a forment un secteur s'étendant sur un angle a à l'intérieur de leurs talons respectifs 5 ou 5a.

La paroi latérale du boîtier porte également d'une part un ergot axial 6 ayant la forme d'un prisme rectangulaire affleurant par l'un de ses côtés la partie supérieure du boîtier et, d'autre part, une ceinture cylindrique en saillie 7 située à une distance d de la face intérieure des ergots 4 et 4a.

De son côté, l'ouverture 2 de la paroi 3 présente deux encoches diamétralement opposées 8 et 8a dont la forme et les dimensions correspondent à celles des ergots 4 et 4a avec leurs talons 5 et 5a de sorte que les ergots et les doigts peuvent être engagés dans les encoches 8 et 8a. La paroi 3 présente également une encoche 9 dont la position angulaire est la même que celle de l'ergot 6 par rapport aux ergots 4 et 4a et une encoche 9a qui est écartée angulairement de l'angle a par rapport à l'encoche 9.

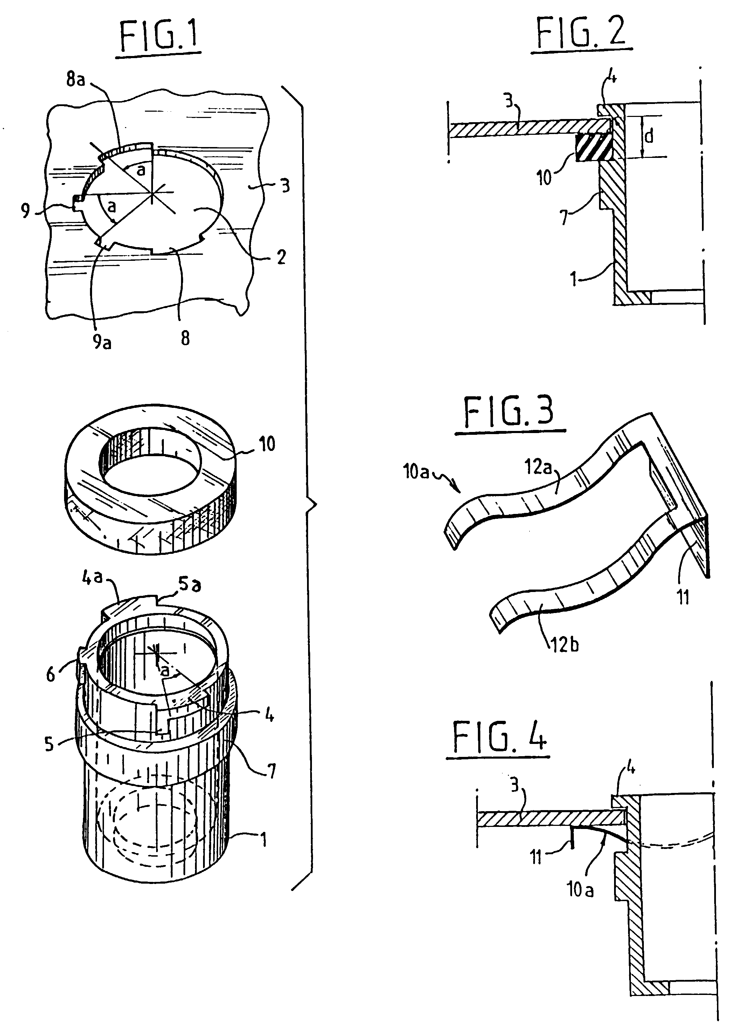

Pour fixer le boîtier 1 à la paroi 3, on place sur le boîtier des moyens élastiques 10 ou 10a qui, à l'état non comprimé, ont une hauteur supérieure à la différence entre la distance d et l'épaisseur de la plaque 3. Dans le mode de réalisation des Figures 1 et 2, ces moyens élastiques sont constitués par une bague en élastomère.

On introduit alors les ergots 4 et 4a dans les encoches 8 et 8a, l'ergot 6 s'introduit en même temps dans l'encoche 9. On presse sur le boîtier de façon à comprimer la bague 10 et que la face intérieure des ergots 4 et 4a vienne au-dessus de la plaque 3 et on le fait pivoter d'un angle a. Pendant ce pivotement les doigts 5 et 5a se déplacent dans les encoches 8 et 8a. En fin de mouvement, les talons viennent en butée contre le bord d'extrémité de l'encoche correspondante et l'ergot 6 se trouve en regard de l'encoche 9a. La bague élastique en se détendant vient plaquer le bord de l'ouverture 2 contre les ergots 4 et 4a; en même temps l'ergot 6 s'engage dans l'encoche 9a, ce qui immobilise le boîtier en rotation.

Dans le mode de réalisation des Figures 3 et 4 les moyens élastiques sont constitués par une fourchette découpée dans une tôle en acier à ressort et comportant un talon rectangulaire 11 dont l'un des grands côtés est prolongé à chacune de ses extrémités par un bord rectangulaire 12a ou 12b. Ces bandes s'étendent approximativement dans un plan perpendiculaire à celui du talon et ont une forme ondulée. Les bandes peuvent ainsi prendre appui à la fois sur la ceinture 7 du boîtier et sur la plaque 3, comme on le voit à la Figure 4, en pressant cette plaque contre les ergots 4 et 4a.

Il va de soi que la présente invention ne doit pas être considérée comme limitée au mode de réalisation décrit et représenté mais en couvre, au contraire, toutes les variantes.

## Revendications

1. Dispositif de fixation du type baïonnette d'un boîtier cylindrique sur une plaque de support ou paroi, comprenant, faisant corps avec le boîtier (1), des ergots périphériques (4 et 4a) coopérant avec des découpes (8 et 8a) de la paroi (3), des moyens d'indexage et de verrouillage angulaire (6) coopérant avec des encoches (9 et 9a) ménagées dans la paroi pour assurer la position angulaire d'introduction des ergots dans les découpes de la paroi et leur position angulaire de verrouillage, le dispositif comprenant en outre des moyens élastiques de rattrapage de jeu interposés entre une collerette extérieure (7) du boîtier et la plaque, caractérisé en ce que les moyens d'indexage et de verrouillage angulaire sont constitués par un ergot axial (6) pouvant traverser une première encoche (9) de la paroi (2) lors de la mise en place du boîtier et s'engager dans une seconde encoche (9a) de la paroi lorsque le boîtier est en position de verrouillage.

2. Dispositif de fixation selon la revendication 1, caractérisé en ce que chacun des ergots périphériques (4 et 4a) est prolongé par un talon (5 ou 5a), la forme et les dimensions des découpes (8 et 8a) de la paroi (2) correspondant à celles des ergots avec leurs talons.

3. Dispositif de fixation selon les revendications 1 et 2, caractérisé en ce que l'écart angulaire des encoches (9 et 9a) est égal à l'angle a correspondant au secteur formé par les ergots (4 et 4a) à l'extérieur de leurs talons (5 et 5a).

4. Dispositif de fixation selon l'une des revendications 1 à 3, caractérisé en ce que les moyens élastiques de rattrapage de jeu sont constitués par une bague en élastomère (10) disposée entre la paroi (3) et ladite collerette extérieure (7) du boîtier.

5. Dispositif de fixation selon l'une des revendications 1 à 3, caractérisé en ce que les moyens élastiques de rattrapage de jeu sont constitués par une fourchette dont les branches (12a et 12b) sont élastiques et ont une forme ondulée.

## Patentansprüche

1. Bajonettartige Befestigungsvorrichtung für ein zylindrisches Gehäuse auf einer Trageplatte oder Wand, das in Einheit mit dem Gehäuse (1) Umfangsvorsprünge (4 und 4a) aufweist, die mit Ausschnitten (8 und 8a) der Wand (3) zusammenwirken, wobei Mittel zur Ausrichtung und winkligen Verriegelung (6) mit Kerben (9 und 9a) zusammenwirken, die in die Wand eingebracht sind, um die Winkellage zur Einführung der Vorsprünge in die Ausschnitte der Wand und deren Verriegelungs-Winkellage sicherzustellen, wobei die Vorrichtung außerdem elastische Spielbeseitigungsmittel aufweist, die zwischen einem äußeren Flansch (7) des Gehäuses und der Platte angeordnet sind, dadurch **gekennzeichnet**, daß die Mittel zur winkligen Ausrichtung und Verriegelung von einem axialen Vorsprung (6) gebildet sind, der eine erste Kerbe (9) der Wand (2) während des Ansetzens des Gehäuses durchqueren kann und in eine zweite Kerbe (9a) der Wand eingreifen kann, wenn sich das Gehäuse in der Verriegelungslage befindet.

2. Befestigungsvorrichtung nach Anspruch 1, dadurch **gekennzeichnet**, daß jeder der Umfangsvorsprünge (4 und 4a) durch einen Ansatz (5 oder 5a) verlängert ist, wobei die Form und die Abmessungen der Ausschnitte (8 und 8a) der Wand (2) denen der Vorsprünge zusammen mit ihren Ansätzen entsprechen.

3. Befestigungsvorrichtung nach Anspruch 1 oder 2, dadurch **gekennzeichnet**, daß die winklige Versetzung der Kerben (9 und 9a) gleich ist dem Winkel a, der einem Sektor entspricht, der von den Vorsprüngen (4 und 4a) an der Außenseite ihrer Ansätze (5 und 5a) gebildet ist.

4. Befestigungsvorrichtung nach einem der Ansprüche 1 bis 3, dadurch **gekennzeichnet**, daß die elastischen Spielbeseitigungsmittel von einem Elastomerring (10) gebildet sind, der zwischen der Wand (3) und dem genannten Außenflansch (7) des Gehäuses angeordnet ist.

5. Befestigungsvorrichtung nach einem der Ansprüche 1 bis 3, dadurch **gekennzeichnet**, daß die elastischen Spielbeseitigungsmittel von einem gabelartigen Bügel gebildet sind, dessen Arme (12a und 12b) elastisch sind und eine gewellte Form aufweisen.

## Claims

1. A bayonet-type device for fastening a cylindrical housing to a support plate or wall, comprising, integral with the housing (1), peripheral lugs (4 and 4a) cooperating with cut-outs (8 and 8a) in the wall (3), indexing and angular locking means (6) cooperating with notches (9 and 9a) provided in the wall to ensure the angular position for introducing the lugs into the cut-outs in the wall and their angular locking position, the device further comprising elastic means for taking up play interposed between an outer flange (7) of the housing and the plate,
characterised in that the indexing and angular locking means are constituted by an axial lug (6) that can pass through a first notch (9) of the wall (2) when the housing is put into position and can be engaged in a second notch (9a) in the wall when the housing is in the locked position.

2. A fastening device according to Claim 1, characterised in that each of the peripheral lugs (4 and 4a) is extended by a heel (5 or 5a), the shape and dimensions of the cut-outs (8 and 8a) in the wall (2) corresponding to those of the lugs together with their heels.

3. A fastening device according to Claims 1 and 2, characterised in that the angular offset of the notches (9 and 9a) is equal to the angle a corresponding to the sector formed by the lugs (4 and 4a) to the outside of their heels (5 and 5a).

4. A fastening device according to one of Claims 1 to 3, characterised in that the elastic means for taking up play are constituted by an elastomer ring (10) arranged between the wall (3) and said external flange (7) of the housing.

5. A fastening device according to one of Claims 1 to 3, characterised in that the elastic means for taking up play are constituted by a fork, the branches (12a and 12b) of which are elastic and are undulating in shape.
